# FASCICULE DE BREVET EUROPEEN

(11) **EP 0 870 675 B1**
(45) Date de publication et mention de la délivrance du brevet: **28.05.2003**
(21) Numéro de dépôt: 98400643.7
(22) Date de dépôt: 19.03.1998
(51) Int. Cl.: B64C 13/50, G05D 1/00

(54) **Dispositif de commande de vol d'un aéronef, en particulier d'un hélicoptère**
Flugsteuerungvorrichtung für ein Flugzeug, insbesondere für einem Hubschrauber
Aircraft flight control device particularly for helicopter

(30) Priorité: 07.04.1997 FR 9704200
(43) Date de publication de la demande: 14.10.1998
(73) Titulaire: EUROCOPTER, 13725 Marignane Cédex (FR)
(72) Inventeur: Vidal, Pierre-Albert, 13220 Chateauneuf Les Martiques (FR); Woirin, Eddy Gaston Jean, 13880 Velaux (FR); Massimi, Jean-Maxime, 13127 Vitrolles (FR); Ressent, Philippe Louis, 13127 Vitrolles (FR)
(74) Mandataire: Bonnetat, Christian

(56) Documents cités:
- US-A- 3 708 735
- US-A- 3 725 818
- US-A- 4 092 578
- US-A- 4 422 180
- US-A- 5 178 307
- US-A- 5 550 731

## Description

La présente invention concerne un dispositif de commande de vol d'un aéronef, en particulier d'un hélicoptère.

On sait que le dispositif de commande de vol d'un aéronef est le dispositif qui permet de capter l'ordre de pilotage engendré par le pilote et de le transmettre aux gouvernes aérodynamiques qui vont induire une évolution de l'appareil dans l'espace. Sur les aéronefs de première génération, le dispositif de commande vol était réalisé de façon mécanique, les commandes du pilote étant effectuées par des manches et palonniers reliés aux gouvernes à l'aide de timoneries mécaniques à base de bielles et/ou de câbles. Les aéronefs de deuxième génération avaient intégré dans la gouverne un système d'amplification de l'effort du pilote, le vérin. Ce vérin était commandé par la timonerie et transmettait son mouvement à la gouverne. Les exigences de sécurité se durcissant, il a fallu doubler le cheminement des timoneries pour survivre à la rupture d'une bielle ou d'un câble.

Sur les aéronefs de troisième génération de type actuel, auxquels est appliquée la présente invention, les timoneries mécaniques sont remplacées par des fils électriques qui transmettent la position d'organes de commande actionnés par le pilote à des calculateurs qui les transforment pour les rendre exécutables par les vérins des gouvernes appropriées.

L'intérêt immédiat d'une telle solution représentant un dispositif de commande de vol électrique notamment pour les avions et en particulier pour les avions de transport civil, est un gain de poids important et la facilité de multiplier les voies de cheminement des commandes. La sécurité est augmentée par le fait que plusieurs cheminements électriques disséminés dans des endroits différents de l'appareil sont moins vulnérables qu'un ou deux cheminements mécaniques. Les calculateurs de commande engendrent également les commandes de stabilisation de l'aéronef qui viennent se superposer aux commandes du pilote.

On notera que, bien que le gain de poids obtenu par l'utilisation d'un dispositif de commande de vol électrique soit moindre sur un hélicoptère que sur un avion, l'intérêt d'un tel dispositif sur un hélicoptère est loin d'être négligeable, notamment en raison de la multiplicité de cheminements possibles.

Toutefois, lorsqu'il est appliqué à un hélicoptère, un dispositif de commande de vol doit être particulièrement performant, en particulier en permettant d'assurer la sécurité avec une gouverne par axe et en étant reconfigurable immédiatement en cas de panne. En effet, les avions et les hélicoptères diffèrent sur deux points importants, à ce sujet :
- d'une part, un avion comporte plusieurs gouvernes qui peuvent le faire réagir sur le même axe. Ainsi, lorsque le cheminement de la commande d'une gouverne tombe en panne, le cheminement de la commande de l'autre gouverne peut prendre la relève. A l'inverse, un hélicoptère ne possède qu'une seule gouverne par axe, et le contrôle de cette gouverne doit assurer la sécurité à lui seul ; et
- d'autre part, un avion présente une certaine stabilité naturelle, ce qui permet au système de commande de la gouverne un certain temps d'absence, lors de la reconfiguration après une panne. A l'inverse, un hélicoptère est instable de nature, ce qui impose un contrôle permanent au risque de le déstabiliser.

On remarquera, de plus, que certains modes de pilotage sont très demandeurs en capacité de calcul, puisqu'ils intègrent en plus des commandes du pilote, des états de l'hélicoptère, comme par exemple les assiettes ou les vitesses angulaires, afin d'améliorer les performances de pilotage, principalement la stabilité. La puissance de calcul nécessaire alors ne peut être fournie que par des calculateurs numériques. Toutefois, de tels calculateurs numériques peuvent être sujets à des pannes ayant plusieurs origines (panne matérielle, erreur logicielle, sensibilité aux radiations ionisantes).

On sait qu'une façon d'éviter ces pannes est d'utiliser pour chaque cheminement des calculateurs de technologies différentes. La technologie analogique en particulier est une bonne réponse à ces problèmes. Toutefois, elle devra être utilisée de façon limitée, car sa faible puissance de calcul ne permet que des modes de pilotage peu enrichis qui ne sont acceptables que si leur probabilité d'occurrence est réduite pour des raisons de fiabilité de la mission.

La---présente invention a pour objet -de -remédier à ces inconvénients. Elle concerne un dispositif de commande de vol d'un aéronef, notamment d'un hélicoptère, de réalisation simple et peu coûteuse, qui permet de satisfaire les exigences précitées, notamment concernant la fiabilité.

A cet effet, selon l'invention, ledit dispositif de commande de vol d'un aéronef, du type recevant une pluralité d'informations et notamment les positions d'organes de commande de vol dudit aéronef et communiquant, en fonction de ces informations, des ordres de commande à des organes de pilotage de l'aéronef, est remarquable en ce qu'il comporte :
- une pluralité de n chaînes de génération d'ordres, dont chacune engendre un ensemble de premiers ordres, en vue de la commande desdits organes de pilotage, et dont au moins une réalise une autosurveillance et engendre des signaux de surveillance correspondants ; et
- une pluralité de p chaînes d'asservissement, dont chacune :
   . reçoit les informations, à savoir les premiers ordres et le cas échéant les signaux de surveillance, engendrées par chacune desdites n chaînes de génération d'ordres ;
   . sélectionne les informations émises par l'une desdites chaînes de génération d'ordres ; et
   . détermine à partir des informations ainsi sélectionnées des seconds ordres,
les seconds ordres déterminés par au moins certaines des p chaînes d'asservissement étant communiqués aux organes de pilotage de l'aéronef comme ordres de commande.

Ainsi, grâce à l'invention et notamment grâce à la redondance par n de la génération d'ordres et par p des traitements, n et p étant de préférence compris entre 3 et 6, on obtient un dispositif particulièrement fiable, permettant de résister aux pannes dans toutes les conditions de mission possibles.

Les moyens mis en oeuvre à cet effet sont à la fois d'ordre technologique, d'ordre architectural ainsi que d'ordre méthodologique et algorithmique, comme on le verra plus en détail ci-dessous, ce qui permet d'accroître la sécurité recherchée.

De plus, ledit dispositif est de réalisation simple et peu coûteuse.

De préférence, chaque chaîne d'asservissement réalise la sélection des informations selon un ordre de priorité prédéfini entre les chaînes de génération d'ordres, en prenant en compte le cas échéant les signaux de surveillance engendrés. De plus, lesdites chaînes d'asservissement travaillent en parallèle et les ordres issus de ces chaînes s'additionnent.

En outre, avantageusement, chacune desdites chaînes de génération d'ordres susceptibles de réaliser une autosurveillance comporte deux voies de traitement distinctes, l'autosurveillance étant réalisée par la comparaison des résultats obtenus pour chacune desdites voies de traitement.

Par ailleurs, pour augmenter davantage encore la fiabilité et la sécurité des traitements, dans un mode de réalisation particulièrement avantageux, au moins l'une desdites chaînes d'asservissement réalise une autosurveillance.

De plus, selon l'invention, les chaînes de génération d'ordres et les chaînes d'asservissement peuvent être :
- du type analogique ; ou
- du type numérique ; ou
- pour partie du type analogique et pour partie du type numérique.

On notera que cette dernière solution est particulièrement avantageuse, notamment dans certaines situations extrêmes. En effet, dans le cas où tous les moyens de calcul d'un desdits types tombent en panne, par exemple tous les moyens de calcul numériques suite à une défaillance logicielle générale desdits moyens numériques, le dispositif conforme à l'invention peut continuer à fonctionner à l'aide des moyens de calcul de l'autre type, à savoir les moyens analogiques dans ce cas.

En outre, selon l'invention, la transmission d'informations entre une chaîne de génération d'ordres et une chaîne d'asservissement peut être réalisée, sous forme analogique par l'intermédiaire de liaisons électriques ou sous forme numérique, par l'intermédiaire de liaisons électriques ou optiques (à base de fibres optiques).

Par ailleurs, dans un mode de réalisation particulièrement avantageux, au moins l'une desdites chaînes de génération d'ordres comporte k chaînes partielles, ainsi qu'au moins un moyen de vote qui est associé auxdites chaînes partielles et qui détermine, à partir des informations engendrées par lesdites chaînes partielles, celles à transmettre aux chaînes d'asservissement.

Dans ce cas, de préférence, le nombre k de chaînes partielles est égal au nombre p de chaînes d'asservissement et chacune desdites chaînes partielles comporte un moyen de vote, lesdits moyens de vote étant reliés respectivement auxdites chaînes d'asservissement.

Les figures du dessin annexé feront bien comprendre comment l'invention peut être réalisée. Sur ces figures, des références identiques désignent des éléments semblables.

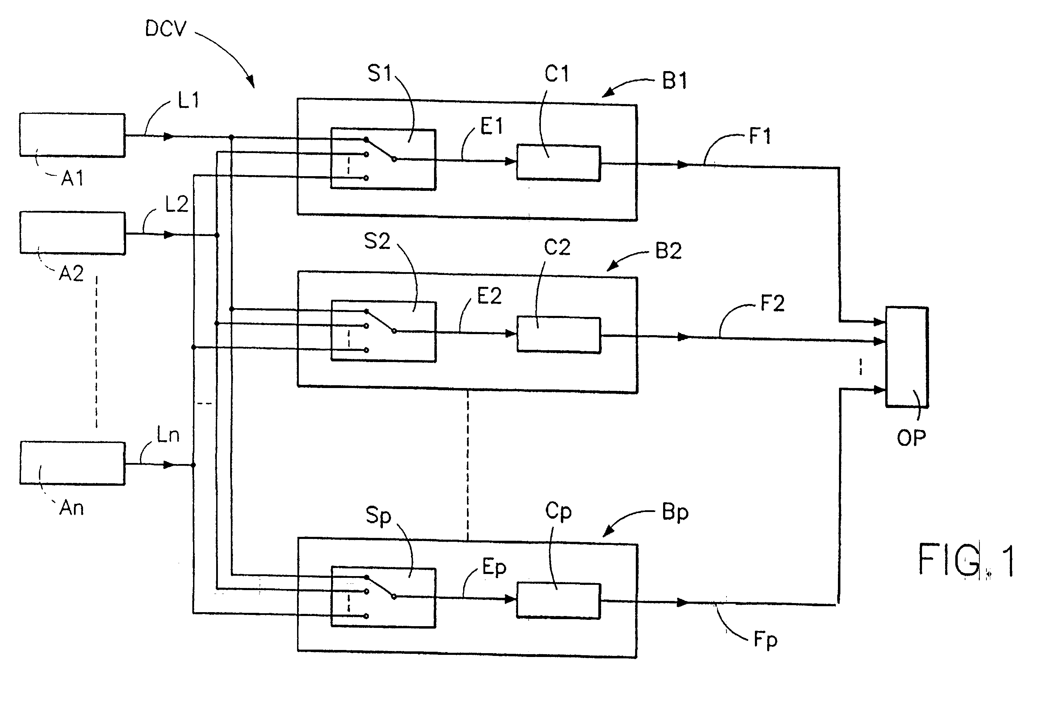

Les figures 1 à 4 sont des schémas synoptiques de dispositifs de commande de vol conformes à l'invention, respectivement dans quatre modes de réalisation différents.

Un dispositif de commande de vol DCV est représenté schématiquement, dans quatre modes de réalisation différents, mais conçus selon le même principe général conforme à l'invention, respectivement sur les figures 1 à 4.

Bien que non exclusivement, ledit dispositif de commande DCV (de préférence électrique) s'applique plus particulièrement à un hélicoptère non représenté. On sait que sur un tel hélicoptère, le contrôle en tangage et en roulis et le contrôle vertical sont réalisés à l'aide de trois vérins contrôlant la position d'un plateau fixe qui transmet sa position à un plateau tournant avec le rotor, communiquant ainsi par l'intermédiaire de biellettes une variation du pas à chaque pale. Chaque vérin participe donc en partie au contrôle de chacun de ces trois axes. Le contrôle en lacet est assuré-par un seul vérin qui contrôle de façon identique le pas des pales du rotor arrière. La perte du contrôle d'un de ces quatre vérins doit donc être évitée par tous les moyens.

L'objet de l'invention est de traiter électriquement et de gérer des ordres du ou des pilotes appliqués en particulier aux manches de commande et au palonnier, en tenant compte de mesures gyrométriques, accélérométriques et/ou d'assiette, pour élaborer de manière sûre des ordres de commande communiqués à des organes de pilotage OP de l'aéronef. Plus précisément, ces ordres de commande sont transmis à des servocommandes de gouvernes de l'aéronef ou à des moteurs commandant de telles servocommandes.

A cet effet, ledit dispositif de commande de vol DCV comporte, selon l'invention, tel que représenté par exemple sur la figure 1 :
- une pluralité de n chaînes A1 à An de génération d'ordres correspondant, soit à des commandes de positions des servocommandes, soit à des commandes d'axes. Chacune desdites n chaînes A1 à An, n étant de préférence compris entre 3 et 6, engendre donc un ensemble de premiers ordres, en vue de la commande desdits organes de pilotage OP, et correspondant donc aux différents axes ou aux différentes servocommandes. De plus, au moins certaines desdites chaînes A1 à An réalisent une autosurveillance et engendrent à cet effet des signaux de surveillance, à savoir des signaux de validité et/ou des signaux de contrôle de cohérence ; et
- une pluralité de p chaînes d'asservissement B1 à Bp travaillant en parallèle, p étant également de préférence compris entre 3 et 6. Lesdites chaînes d'asservissement B1 à Bp reçoivent les premiers ordres et le cas échéant les signaux de surveillance engendrés par les chaînes A1 à An par l'intermédiaire de liaisons L1 à Ln, déterminent des seconds ordres et les transmettent aux organes de pilotage OP par l'intermédiaire de liaisons F1 à Fp.

Comme on peut le voir sur la figure 1, chacune desdites liaisons L1 à Ln est reliée à chacune desdites chaînes d'asservissement B1 à Bp. Ces liaisons peuvent être des liaisons électriques ou optiques (c'est-à-dire à fibres optiques) et les informations transmises peuvent être du type analogique ou du type numérique.

Selon l'invention, chacun desdites chaînes d'asservissement Bl à Bp comporte :
- un moyen de sélection Si à Sp relié à toutes lesdites liaisons L1 à Ln, qui sélectionne les informations (premiers ordres et le cas échéant signaux de surveillance) communiquées par l'une desdites chaînes A1 à An et les transmet à un moyen de calcul respectivement C1 à Cp par l'intermédiaire d'une liaison respectivement E1 à Ep. La sélection est réalisée selon un ordre de priorité prédéfini entre les chaînes A1 à An de génération d'ordres, en prenant en compte le cas échéant les signaux de surveillance engendrés ; et
- ledit moyen de calcul C1 à Cp qui détermine à partir des premiers ordres transmis par les moyens de sélection Si à Sp des seconds ordres qu'il transmet, par l'intermédiaire d'une liaison respectivement F1 à Fp, aux organes de pilotage OP de l'aéronef.

Dans un mode de réalisation particulièrement avantageux, au moins l'une desdites chaînes d'asservissement B1 à Bp réalise une autosurveillance.

En outre, selon l'invention, le dispositif de commande de vol DCV s'appuie sur les principes suivants :
- la conception d'au moins la première chaîne de génération d'ordres, dans l'ordre de priorité de la sélection, permettant que la production de premiers ordres erronés associés à un signal de validité à l'état valide, et le cas échéant à un signal de contrôle de cohérence à l'état cohérent, soit extrêmement improbable ; et/ou
- la possibilité de dissymétrie partielle ou totale en matière de conception, de réalisation ou de technologie, qui peut être introduite du fait de l'architecture entre les n chaînes A1 à An de génération d'ordres, ainsi qu'entre les p chaînes d'asservissement B1 à Bp.

De préférence, toutes les chaînes de génération d'ordres sont autosurveillées.

Ainsi, grâce à l'invention, on réalise une gestion de reconfiguration qui s'appuie :
- sur l'autosurveillance propre à chaque chaîne A1 à An, qui est transmise aux moyens de sélection Sl à Sp par l'intermédiaire des signaux de surveillance ;
- sur la logique mise en place à l'intérieur des chaînes A1 à An lorsqu'elles sont de type numérique ; et
- sur le processus de sélection précité et réalisé par les moyens de sélection Si à Sp.

Cette gestion de reconfiguration et ladite logique associée permettent de sélectionner la génération d'ordres présentant le meilleur niveau de fonctionnalité. Par exemple dans le cas de chaînes numériques, en présence de dégradations n'affectant pas la sécurité, mais affectant l'une desdites chaînes numériques, chacune des chaînes numériques va positionner sa validité en fonction à la fois :
- de son numéro dans la liste de priorité ; et
- de sa dégradation respective vis-à-vis de la dégradation des autres chaînes, selon une relation d'ordre correspondant à une liste de dégradations préétablie.

Ainsi, par exemple dans le cas de deux chaînes numériques, la perte de certaines fonctionnalités dans la chaîne de génération d'ordres numériques la plus prioritaire, alors que l'autre chaîne se trouve dans un état nominal, va conduire à l'invalidation temporaire de ladite chaîne de génération d'ordres la plus prioritaire. En cas de panne invalidant la seconde chaîne numérique, ladite première chaîne repositionne sa validité à l'état valide et se trouve de nouveau sélectionnée.

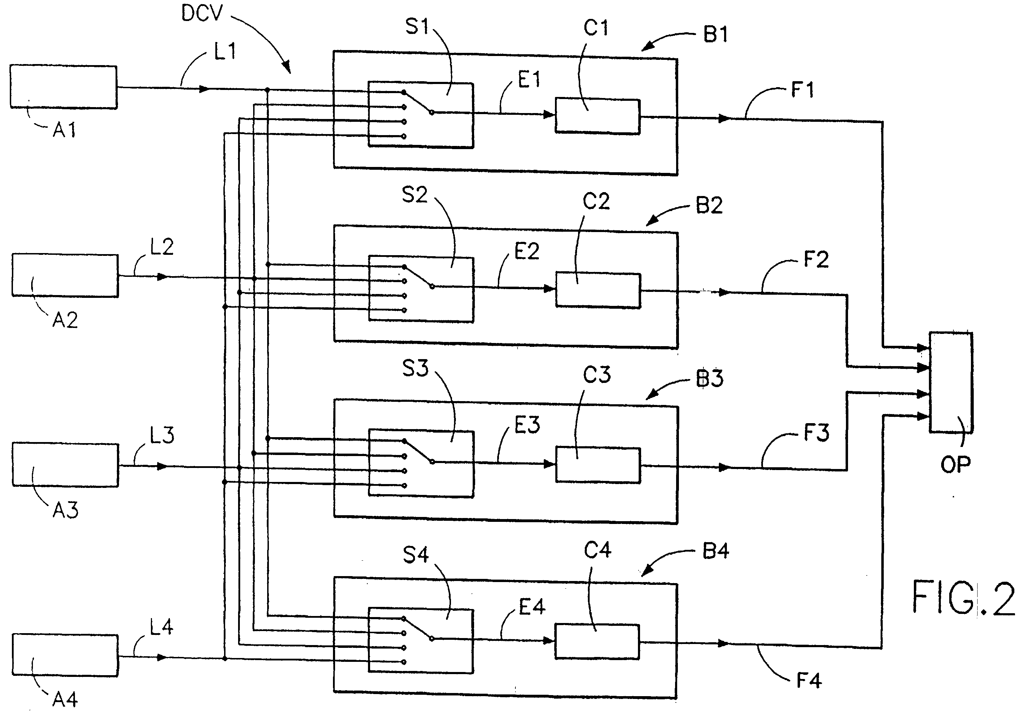

Dans le second mode de réalisation représenté sur la figure 2, le dispositif de commande de vol DCV appliqué à un hélicoptère comporte quatre chaînes A1 à A4 de génération d'ordres et quatre chaînes d'asservissement B1 à B4.

Dans ce cas, chacune desdites chaînes A1 à A4 est duale. Dans le cadre de la présente invention, une chaîne duale est une chaîne comprenant des dispositifs permettant de surveiller les ordres élaborés grâce à une voie de traitement redondante, et positionnant en cas de désaccord entre les voies de traitement, internes à ladite chaîne, un ou des signaux de validité.

La dualité desdites chaînes A1 à A4 est réalisée dans ce cas de façon à garantir l'autosurveillance avec une probabilité extrêmement faible d'envoi d'un ordre erroné, sans perte de validité, ni perte de cohérence des signaux de contrôle de cohérence.

De plus, chacune desdites chaînes A1 à A4 engendre des premiers ordres correspondant à des ordres pour la commande de chacune des quatre servocommandes de l'hélicoptère. Dans ce cas, chacune desdites servocommandes est commandée par quatre moteurs, qui sont alimentés respectivement par les seconds ordres élaborés par les quatre chaînes B1 à B4 et qui travaillent en sommation d'efforts de manière à imposer mécaniquement leurs positions directement auxdites servocommandes.

Dans le mode de réalisation de la figure 2, les chaînes A1 et A2 sont du type numérique et les chaînes A3 et A4 du type analogique.

Chacune des chaînes numériques A1 et A2 exécute des lois de pilotage dites évoluées. Elle comporte, à cet effet, deux voies de traitement :
- dont l'une engendre lesdits premiers ordres, c'est-à-dire les ordres de commande relatifs aux servocommandes ; et
- dont l'autre engendre un signal de cohérence permettant aux chaînes d'asservissement de vérifier la cohérence avec les premiers ordres engendrés par ladite première voie de traitement précitée.

De plus, chacune desdites chaînes A1 et A2 émet deux signaux de validité. Chaque voie de traitement effectue les traitements sur des processeurs synchronisés par une même horloge en temps réel et est associée à des capteurs de manche de pilotage dédiés, qu'elle alimente directement.

En outre, les chaînes analogiques A3 et A4 assurent, en plus du traitement des entrées de pilotage, une aide à la stabilisation sur les axes de tangage et de roulis. Ces chaînes A3 et A4 comportent également chacune deux voies de traitement qui engendrent des signaux de même type que ceux des chaînes numériques A1 et A2. Chaque voie de traitement est associée à des capteurs de manche de pilotage dédiés (de type potentiométrique) qu'elle alimente directement et comprend de plus un capteur gyrométrique sur l'axe de tangage et sur l'axe de roulis. De plus, ces deux chaînes analogiques A3 et A4 sont conçues pour résister à des radiations ionisantes.

En fonctionnement nominal, les chaînes B1 à B4 sélectionnent en priorité la chaîne de génération d'ordre A1, puis la chaîne A2 en cas de défaillance de la première, puis la chaîne A3 en cas de défaillance des deux précédentes, et enfin la chaîne A4 en cas de perte des trois premières.

Par conséquent, l'architecture précitée permet de survivre à une combinaison de pannes affectant jusqu'à trois chaînes parmi les chaînes A1 à A4.

Par ailleurs, l'architecture précitée qui présente une dissymétrie totale entre les chaînes A1 et A2 de génération d'ordres numériques et les chaînes A3 et A4 de génération d'ordres analogiques, permet de survivre à d'éventuels modes de défaillance communs, par exemple des chaînes numériques A1 et A2, en particulier des modes de défaillance logiciels.

En effet, en cas de perte des validités des deux chaînes numériques A1 et A2 résultant soit de la perte consécutive des deux chaînes A1 et A2, soit d'un éventuel mode commun de défaillance, par exemple de type logiciel, la chaîne de génération d'ordres analogiques la plus prioritaire est sélectionnée.

En outre, lors d'une perte momentanée des générations d'ordres numériques, lors de la remontée de validité d'une desdites chaînes numériques, cette dernière est de nouveau sélectionnée après confirmation par les chaînes d'asservissement B1 à B4.

De plus, les chaînes d'asservissement B1 à B4 sont de type dual de manière à pouvoir se détecter en panne. Elles sont réalisées en technologie analogique. La conception de ces chaînes B1 à B4 permet :
- en l'absence de panne, la génération de seconds ordres correspondant à des valeurs moyennes entre lesdites chaînes ;
- en cas d'une panne détectée par une chaîne, de l'éliminer ; et
- en cas de panne non autodétectée, aux chaînes non en panne de surpasser la chaîne affectée par la panne.

Par conséquent, l'architecture précitée permet de survivre à trois pannes détectées des chaînes d'asservissement ou de survivre à la combinaison d'une panne non autodétectée de ces chaînes avec une panne détectée de ces chaînes.

On notera que, dans le cadre de la présente invention, la réalisation du dispositif de commande de vol DCV peut varier de façon générale sur :
- la nature du protocole entre les chaînes Al à An de génération d'ordres et les chaînes d'asservissement B1 à Bp ;
- le niveau de dissymétrie entre les chaînes Al à An de génération d'ordres ;
- l'utilisation éventuelle d'au moins une chaîne de génération d'ordres non autosurveillée ou à taux d'autosurveillance réduit. Une chaîne non autosurveillée est une chaîne de type simplex, considérée comme systématiquement valable, et utilisée uniquement en cas de pannes des chaînes précédentes ; et
- l'utilisation de chaînes d'asservissement B1 à Bp non autosurveillées. Ceci est possible lorsque le nombre p est suffisamment élevé. Toutefois, le dispositif DCV est alors uniquement apte à supporter un nombre de pannes affectant les chaînes d'asservissement B1 à Bp, qui est strictement inférieur à p/2.

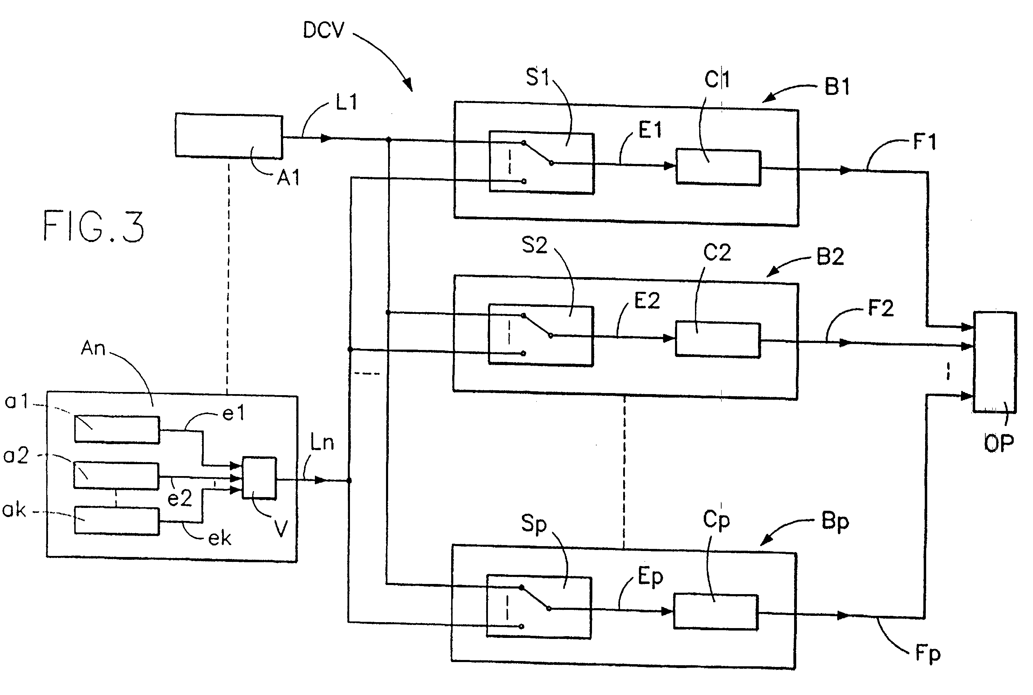

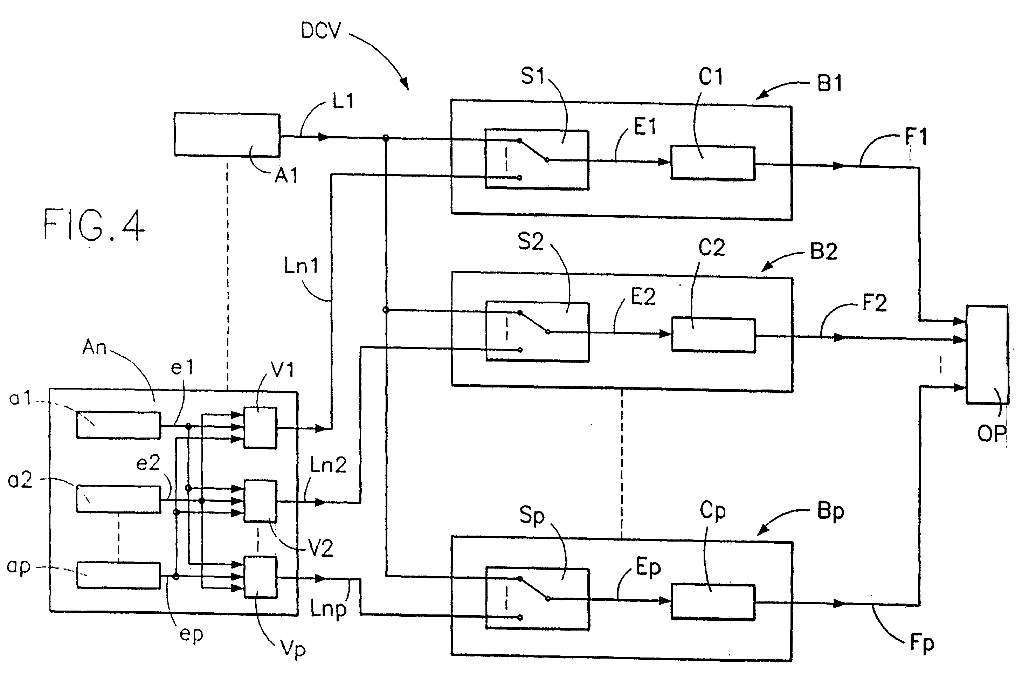

Selon une autre variante possible, au moins l'une An des chaînes A1 à An comporte des chaînes partielles al à ak fonctionnant en parallèle, tel que représenté sur les figures 3 et 4.

Dans le mode de réalisation représenté sur la figure 3, ladite chaîne An comporte en plus desdites k chaînes partielles al à ak, un moyen de vote V relié auxdites chaînes partielles al à ak respectivement par l'intermédiaire de liaisons el à ek.

Ledit moyen de vote V détermine en fonction des informations reçues desdites chaînes partielles al à ak, celles à transmettre aux chaînes B1 à Bp par la liaison Ln, selon le principe suivant :
- lorsque les valeurs d'entrée du moyen de vote V présentent une valeur identique à un certain seuil près, la valeur de sortie dudit moyen de vote V est une combinaison linéaire desdites valeurs d'entrée ; et
- lorsqu'une valeur d'entrée s'écarte d'une valeur qui est supérieure, à un seuil près, de la moyenne des valeurs d'entrée, elle est éliminée.

Dans le mode de réalisation particulier représenté sur la figure 4, la chaîne An comporte p chaînes partielles al à ap fonctionnant en parallèle et chacune desdites chaînes partielles al à ap comporte un moyen de vote V1 à Vp, lesdits moyens de vote V1 à Vp étant reliés auxdites chaînes d'asservissement B1 à Bp respectivement par l'intermédiaire de liaisons Ln1 à Lnp.

## Revendications

1. Dispositif de commande de vol d'un aéronef, en particulier d'un hélicoptère, ledit dispositif comportant une pluralité de n chaînes de génération d'ordres (A1 à An) et une pluralité de p chaînes d'asservissement (B1 à Bp), recevant une pluralité d'informations et notamment les positions d'organes de commande de vol dudit aéronef et communiquant, en fonction de ces informations, des ordres de commande à des organes de pilotage (OP) de l'aéronef,
**caractérisé en ce que** chacune desdites n chaînes de génération d'ordres (A1 à An) engendre un ensemble de premiers ordres, en vue de la commande desdits organes de pilotage (OP), et au moins l'une d'elles réalise une autosurveillance et engendre des signaux de surveillance correspondants, et **en ce que** chacune desdites p chaînes d'asservissement (B1 à Bp) comprend :
- un moyen de sélection (S1 à Sp) qui reçoit les informations, à savoir les premiers ordres et le cas échéant les signaux de surveillance, engendrées par chacune desdites n chaînes de génération d'ordres (A1 à An), et qui sélectionne les informations émises par l'une desdites chaînes de génération d'ordres (A1 à An), ladite sélection d'informations étant réalisée selon un ordre de priorité prédéfini entre les chaînes de génération d'ordres (A1 à An), en prenant en compte le cas échéant les signaux de surveillance engendrés ; et
- un moyen de calcul (C1 à Cp) qui détermine à partir des informations ainsi sélectionnées des seconds ordres,
les seconds ordres déterminés par au moins certaines desdites p chaînes d'asservissement (B1 à Bp) étant communiqués aux organes de pilotage (OP) de l'aéronef comme ordres de commande.

2. Dispositif selon la revendication 1, **caractérisé en ce que** lesdites chaînes d'asservissement (B1 à Bp) travaillent en parallèle, les ordres issus de ces chaînes s'additionnant.

3. Dispositif selon l'une des revendications 1 et 2,
**caractérisé en ce que** chacune desdites chaînes de génération d'ordres (A1 à An) susceptibles de réaliser une autosurveillance comporte deux voies de traitement distinctes, l'autosurveillance étant réalisée par la comparaison des résultats obtenus pour chacune desdites voies de traitement.

4. Dispositif selon l'une quelconque des revendications précédentes, **caractérisé en ce qu'**au moins l'une desdites chaînes d'asservissement (B1 à Bp) réalise une autosurveillance et l'inhibition automatique d'une chaîne détectée en panne.

5. Dispositif selon l'une quelconque des revendications précédentes, **caractérisé en ce qu'**au moins l'une (A1, A2) desdites chaînes de génération d'ordres (A1 à An) est du type numérique,

6. Dispositif selon l'une quelconque des revendications précédentes,
**caractérisé en ce qu'**au moins l'une (A3, A4) desdites chaînes de génération d'ordres (A1 à An) est du type analogique.

7. Dispositif selon l'une quelconque des revendications précédentes,
**caractérisé en ce qu'**au moins l'une desdites chaînes d'asservissement (B1 à Bp) est du type analogique.

8. Dispositif selon l'une quelconque des revendications 1 à 6,
**caractérisé en ce qu'**au moins l'une desdites chaînes d'asservissement (B1 à Bp) est du type numérique.

9. Dispositif selon l'une quelconque des revendications précédentes,
**caractérisé en ce qu'**au moins une partie de la transmission d'informations entre les chaînes de génération d'ordres (A1 à An) et les chaînes d'asservissement (B1 à Bp) est réalisée par des liaisons électriques (L1 à Ln).

10. Dispositif selon l'une quelconque des revendications 1 à 9,
**caractérisé en ce qu'**au moins une partie de la transmission d'informations entre les chaînes de génération d'ordres (A1 à An) et les chaînes d'asservissement (B1 à Bp) est réalisée par des liaisons optiques (L1 à Ln).

11. Dispositif selon l'une quelconque des revendications précédentes,
**caractérisé en ce que** les nombres n et p sont compris chacun entre 3 et 6.

12. Dispositif selon l'une quelconque des revendications précédentes,
**caractérisé en ce qu'**au moins l'une (An) desdites chaînes de génération d'ordres (A1 à An) comporte k chaînes partielles (a1 à ak), ainsi qu'au moins un moyen de vote (V, V1 à Vk) qui est associé auxdites chaînes partielles (a1 à ak) et qui détermine, à partir des informations engendrées par lesdites chaînes partielles (a1 à ak), celles à transmettre aux chaînes d'asservissement (B1 à Bp).

13. Dispositif selon la revendication 12,
**caractérisé en ce que** le nombre k de chaînes partielles (a1 à ak) est égal au nombre p de chaînes d'asservissement (B1 à Bp) et **en ce que** chacune desdites chaînes partielles (a1 à ap) comporte un moyen de vote (V1 à Vp), lesdits moyens de vote (V1 à Vp) étant reliés respectivement auxdites chaînes d'asservissement (B1 à Bp).

## Patentansprüche

1. Flugsteuerungsvorrichtung eines Luftfahrzeugs, insbesondere eines Hubschraubers, wobei die Flugsteuerungsvorrichtung ein Anzahl von n Befehlsgeneriergliedern (A1 bis An) und eine Anzahl von p Regelungsgliedern (B1 bis Bp) aufweist, die eine Anzahl von Daten und insbesondere die Positionen von Flugsteuerungsorganen des Luftfahrzeugs aufnehmen und in Abhängigkeit von diesen Daten Steuerbefehle an die Organe der Fluglagenregelung (OP) des Luftfahrzeugs übertragen, **dadurch gekennzeichnet, dass** jedes der n Befehlsgenerierglieder (A1 bis An) eine Gesamtheit von Befehlen erster Ordnung für die Steuerung der Organe der Fluglagenregelung (OP) erzeugt und mindestens eines von ihnen eine Selbstüberwachung ausführt und entsprechende Signale zur Überwachung erzeugt, und dadurch, dass jedes der p Regelungsglieder (B1 bis Bp) enthält:
- ein Auswahlmittel (S1 bis Sp), welches die Daten aufnimmt, nämlich die Befehle erster Ordnung und gegebenenfalls die Überwachungssignale, die von jedem der n Befehlsgenerierglieder (A1 bis An) erzeugt werden, und welche die von den einem der Befehlsgeneriergliedern abgegebenen Daten auswählt, wobei die Auswahl der Daten nach einer vorher unter den Befehlsgeneriergliedern (A1 bis An) festgelegten Prioritätenfolge erfolgt, wobei gegebenenfalls die erzeugten Überwachungssignale Berücksichtigung finden; und
- ein Berechnungsmittel (C1 bis Cp), welches auf der Grundlage der so ausgewählten Daten Befehle zweiter Ordnung festlegt, wobei die Befehle zweiter Ordnung, die von mindestens einigen der p Regelungsgliedern (B1 bis Bp) festgelegt worden sind, an die Organe für die Fluglagenregelung (OP) des Luftfahrzeugs als Steuerbefehle übertragen werden.

2. Vorrichtung nach Anspruch 1, **dadurch gekennzeichnet, dass** die Regelungsglieder (B1 bis Bp) parallel arbeiten, wobei sich die von diesen Gliedern ausgegebenen Befehle addieren.

3. Vorrichtung nach einem der Ansprüche 1 und 2, **dadurch gekennzeichnet, dass** jedes der Befehlsgenerierglieder (A1 bis An), die für die Durchführung einer Selbstüberwachung geeignet sind, zwei unterschiedliche Bearbeitungsstrecken aufweist, wobei die Selbstüberwachung durch den Vergleich der für jede der Bearbeitungsstrecken erhaltenen Ergebnisse erfolgt.

4. Vorrichtung nach einem beliebigen der vorangegangenen Ansprüche, **dadurch gekennzeichnet, dass** mindestens eines der Regelungsglieder (B1 bis Bp) eine Selbstüberwachung und den automatischen Ausschluss eines als gestört festgestellten Gliedes durchführt.

5. Vorrichtung nach einem beliebigen der vorangegangenen Ansprüche, **dadurch gekennzeichnet dass** mindestens eines (A1, A2) der Befehlsgenerierglieder (A1 bis An) vom numerischen Typ ist.

6. Vorrichtung nach einem beliebigen der vorangegangenen Ansprüche, **dadurch gekennzeichnet dass** mindestens eines (A3, A4) der Befehlsgenerierglieder (A1 bis An) vom analogen Typ ist.

7. Vorrichtung nach einem beliebigen der vorangegangenen Ansprüche, **dadurch gekennzeichnet dass** mindestens eines der Regelungsglieder (B1 bis Bp) vom analogen Typ ist.

8. Vorrichtung nach einem beliebigen der Ansprüche 1 bis 6, **dadurch gekennzeichnet, dass** mindestens eines der Regelungsglieder (B1 bis Bp) vom numerischen Typ ist.

9. Vorrichtung nach einem beliebigen der vorangegangenen Ansprüche, **dadurch gekennzeichnet, dass** mindestens ein Teil der Übertragung der Daten zwischen den Befehlsgeneriergliedern (A1 bis An) und den Regelungsgliedern (B1 bis Bp) durch elektrische Verbindungen (L1 bis Ln) erfolgt.

10. Vorrichtung nach einem beliebigen der Ansprüche 1 bis 9, **dadurch gekennzeichnet, dass** mindestens ein Teil der Übertragung der Daten zwischen den Befehlsgeneriergliedern (A1 bis An) und den Regelungsgliedern (B1 bis Bp) durch optische Verbindungen (L1 bis Ln) erfolgt.

11. Vorrichtung nach einem beliebigen der vorangegangenen Ansprüche, **dadurch gekennzeichnet, dass** die Werte für n und p zwischen 3 und 6 liegen.

12. Vorrichtung nach einem beliebigen der vorangegangenen Ansprüche, **dadurch gekennzeichnet, dass** mindestens eines (An) der Befehlsgenerierglieder (A1 bis An) k partielle Glieder (al bis ak) sowie mindestens ein Wählmittel (V, V1 bis Vk) aufweist, welches mit den partiellen Gliedern (al bis ak) verbunden ist und welches auf der Grundlage der von den partiellen Gliedern (al bis ak) erzeugten Daten diejenigen festlegt, die an die Regelungsglieder (B1 bis Bp) übertragen werden sollen.

13. Vorrichtung nach Anspruch 12, **dadurch gekennzeichnet, dass** die Anzahl k der partiellen Glieder (al bis ak) gleich der Anzahl p der Regelungsglieder (B1 bis Bp) ist, und dadurch, dass jedes der partiellen Glieder (al bis ap) ein Wählmittel (V1 bis Vp) aufweist, welches mit den jeweiligen Regelungsgliedern (B1 bis Bp) verbunden ist.

## Claims

1. A flight control device for an aircraft, in particular a helicopter, said device including a plurality of n instruction generating systems (A1 through An) and a plurality of p servocontrol systems (B1 through Bp), receiving a plurality of streams of information and in particular positions of flight control units of said aircraft and, in accordance with said information, communicating command instructions to control units (OP) of the aircraft, **characterized in that** each of said n instruction generating systems (A1 through An) generates a set of first command instructions for said control units (OP) and at least one of them performs autosurveillance and generates corresponding surveillance signals and **in that** each of said p servocontrol systems (B1 through Bp) includes:
- selector means (S1 through Sp) that receive the information, that is to say the first instructions and where applicable the surveillance signals, generated by each of said n instruction generating systems (A1 through An) and select the information sent by one of said instruction generating systems (A1 through An) in accordance with a predefined order of relative priority of the instruction generating systems (A1 through An) and allowing where necessary for the surveillance signals generated; and
- computing means (C1 through Cp) that determine second instructions from the information selected in this way, the second instructions determined by at least some of said p servocontrol systems (B1 through Bp) being communicated to the control units (OP) of the aircraft as command instructions.

2. A device according to claim 1 **characterized in that** said servocontrol systems (B1 through Bp) operate in parallel and the instructions from said systems are summed.

3. A device according to either claim 1 or claim 2 **characterized in that** each of said instruction generating systems (A1 through An) adapted to perform autosurveillance includes two separate processing channels and the autosurveillance is effected by comparison of results obtained for each of said processing channels.

4. A device according to any of the preceding claims **characterized in that** at least one of said servocontrol systems (B1 through Bp) performs autosurveillance and automatic disabling of a system detected to have failed.

5. A device according to any of the preceding claims **characterized in that** at least one (A1, A2) of said instruction generating systems (A1 through An) is a digital system.

6. A device according to any of the preceding claims **characterized in that** at least one (A3, A4) of said instruction generating systems (A1 through An) is an analogue system.

7. A device according to any of the preceding claims **characterized in that** at least one of said servocontrol systems (B1 through Bp) is an analogue system.

8. A device according to any of claims 1 to 6 **characterized in that** at least one of said servocontrol systems (B1 through Bp) is a digital system.

9. A device according to any of the preceding claims **characterized in that** at least some of the information transmitted between the instruction generating systems (A1 through An) and the servocontrol systems (B1 through Bp) is transmitted by electrical links (L1 through Ln).

10. A device according to any of claims 1 to 9 **characterized in that** at least some of the information transmitted between the instruction generating systems (A1 through An) and the servocontrol systems (B1 through Bp) is transmitted by optical links (L1 through Ln).

11. A device according to any of the preceding claims **characterized in that** the numbers n and p are each in the range 3 to 6.

12. A device according to any of the preceding claims **characterized in that** at least one (An) of said instruction generating systems (A1 through An) includes k partial systems (al through ak) and at least one voter (V, V1 through Vk) which is associated with said partial systems (al through ak) and which determines on the basis of information generated by said partial systems (a1 through ak) which information is to be transmitted to the servocontrol systems (B1 through Bp).

13. A device according to claim 12 **characterized in that** the number k of partial systems (a1 through ak) is equal to the number p of servocontrol systems (B1 through Bp) and **in that** each of said partial systems (a1 through ap) includes a voter (V1 through Vp), said voters (V1 through Vp) being connected to respective servocontrol systems (B1 through Bp).
